# EUROPÄISCHE PATENTANMELDUNG

(11) **EP 4 764 437 A1**
(43) Veröffentlichungstag der Anmeldung: **24.06.2026**
(21) Anmeldenummer: 25218035.1
(22) Anmeldetag: 24.11.2025
(51) Int. Cl.: G01K 7/08, G01K 1/02, G01K 17/00, B33Y 80/00

(54) **BAUTEILINTEGRIERTER TEMPERATURSENSOR UND BAUTEIL MIT INTEGRIERTEM TEMPERATURSENSOR SOWIE VERFAHREN ZUR HERSTELLUNG EINES BAUTEILINTEGRIERTEN TEMPERATURSENSORS**

(30) Priorität: 17.12.2024 DE 102024138359
(71) Anmelder: Deutsches Zentrum für Luft- und Raumfahrt e.V., 53227 Bonn (DE)
(72) Erfinder: Klingenberg, Florian, 53227 Bonn (DE); Willems, Sebastian, 53227 Bonn (DE); Gülhan, Ali, 53227 Bonn (DE)
(74) Vertreter: dompatent

(57) **Zusammenfassung**

Temperatursensor zur Temperaturmessung in einem Bauteil, aufweisend einen ersten Leiter aus einem ersten Material und einen zweiten Leiter aus einem zweiten Material, wobei sich das erste Material vom zweiten Material unterscheidet und der erste und zweite Leiter an einer Kontaktstelle elektrisch und thermisch miteinander verbunden sind und der erste Leiter durch das zu vermessende Bauteil ausgebildet ist. Weiterhin ein Bauteil mit mindestens einem integrierten Temperatursensor, wobei das Bauteil vorzugsweise weitergebildet ist anhand der Merkmale des Temperatursensors. Verfahren zur Herstellung eines bauteilintegrierten Temperatursensors aufweisend die Schritte: Bereitstellen eines ersten Teils eines Bauteils aus einem ersten Material mit einer Grenzfläche; Bereitstellen mindestens eines zweiten Leiters aus einem zweiten Material an der Grenzfläche des ersten Teils des Bauteils, wobei der zweite Leiter zumindest teilweise vom Bauteil umgeben ist, so dass eine Kontaktstelle innerhalb des Bauteils ausgebildet ist; und schichtweiser Aufbau eines zweiten Teils des Bauteils aus einem ersten Material auf der Grenzfläche mittels Selektivem Lasersinter-Verfahren, wobei der mindestens eine zweite Leiter mit dem Bauteil an der Kontaktstelle mittels Selektivem Lasersinter-Verfahren verschmolzen wird.

## Beschreibung

Die vorliegende Erfindung betrifft einen bauteilintegrierten Temperatursensor zur Temperaturmessung in einem Bauteil, ein Bauteil mit integriertem Temperatursensor sowie ein Verfahren zur Herstellung eines bauteilintegrierten Temperatursensors.

Aus dem Stand der Technik sind Temperaturmessungen zur Erfassung von Bauteiltemperaturen bekannt. Bei den bekannten Temperaturmessungen, bspw. mittels Thermoelemente oder Widerstandssensoren, wird das Messelement vor der Messung auf einer Oberfläche des zu vermessenden Bauteils angebracht und ein thermischer Kontakt zum Bauteil hergestellt, bspw. über Kleben oder Schweißen.

Andere bekannte Temperaturmessungen basieren auf optischen Verfahren, wobei die Bauteiloberfläche berührungslos mit einem Sensor erfasst wird.

Ein Nachteil des Stands der Technik, bspw. bei Thermoelementen oder Widerstandssensoren, liegt in der Abhängigkeit vom thermischen Kontakt des Temperatursensors zum Bauteil. Die Temperaturmessung erfolgt in dem zusätzlich auf dem Bauteil angebrachten Messelement, woraus Rückschlüsse auf die eigentliche Bauteiltemperatur gezogen werden. Somit ist der Wärmeübergang zwischen dem Bauteil und dem aufgebrachten Messelement entscheidend für die Genauigkeit bzw. Aussagekraft der Temperaturmessung. Weiterhin müssen die Messstellen nach Herstellung des Bauteils für das Anbringen der Messelemente zugänglich sein.

Optische Verfahren hingegen sind auf die Erfassung der Oberflächentemperatur eines Bauteils beschränkt. Zudem ist die Genauigkeit dieser Verfahren abhängig von der Kenntnis der Materialeigenschaften, bspw. der Emissivität. Hierbei kann sich die Emissivität des Bauteils, bspw. durch Oxidation oder Verschmutzung, verändern. Manche Bauteilmaterialien erfordern zunächst eine Behandlung der Oberfläche, bspw. bei reflektierenden Oberflächen, was die Genauigkeit der Messung zusätzlich beeinträchtigen kann. Schließlich ist eine optische Zugänglichkeit der Messstelle erforderlich.

Dies führt dazu, dass insbesondere eine Temperaturverteilung oder Temperaturgradienten innerhalb von Bauteilen nur unzureichend gemessen werden können und so bspw. die Bestimmung von Wärmeflussdichten in Bauteilen mit großen Unsicherheiten behaftet ist.

Ausgehend von den vorbezeichneten Nachteilen des Stands der Technik stellt sich die vorliegende Erfindung die Aufgabe einen integrierten Temperatursensor, ein Bauteil mit einem integrierten Temperatursensor sowie ein Verfahren zur Herstellung eines bauteilintegrierten Temperatursensors bereit zu stellen, zur genauen Erfassung von Temperaturen, insbesondere einer Temperaturverteilung, innerhalb von Bauteilen, insbesondere zur Bestimmung einer Wärmeflussdichte.

Gemäß einem ersten Aspekt der vorliegenden Erfindung wird ein Temperatursensor zur Temperaturmessung in einem Bauteil bereitgestellt, aufweisend einen ersten Leiter aus einem ersten Material und einen zweiten Leiter aus einem zweiten Material, wobei sich das erste Material vom zweiten Material unterscheidet und der erste und zweite Leiter an einer Kontaktstelle elektrisch und thermisch miteinander verbunden sind und der erste Leiter durch das zu vermessende Bauteil ausgebildet ist. Durch den ersten Leiter und den zweiten Leiter werden die beiden Schenkel eines Thermoelementes ausgebildet, wobei das Bauteil integraler Bestandteil einer Materialpaarung des Thermoelementes ist. Die Temperaturmessung erfolgt an der Kontaktstelle, wobei die Kontaktstelle als Messstelle des Temperatursensors ausgebildet ist. Somit entfallen Messungenauigkeiten aufgrund eines unzureichenden Wärmeübergangs durch das Aufbringen eines separaten Messelements an der Messstelle, bspw. durch Kleben oder Schweißen.

Bevorzugt sind das erste Material und das zweite Material als Metalle ausgebildet, wobei das erste und das zweite Material insbesondere einen thermoelektrischen Effekt aufweisen. Hierbei kommt es zu einer Bewegung der Ladungsträger im Leiter, aufgrund eines Temperaturgradienten entlang des Leiters. Dies führt zu einer elektrischen Spannung (Potentialunterschied) zwischen den beiden Leiterenden, welche für jedes Leitermaterial anders ist. Somit kann aus der Differenz der elektrischen Spannungen eines Materialpaares aus unterschiedlichen metallischen ersten und metallischen zweiten Materialien eine resultierende Thermospannung gemessen werden (Seebeck-Effekt).

Bevorzugt ist der zweite Leiter zumindest teilweise vom Bauteil umgeben, so dass die Kontaktstelle innerhalb des Bauteils ausgebildet ist. Herbei dringt der zweite Leiter in den Körper des Bauteils ein, wobei die Eindringtiefe an die Messaufgabe angepasst werden kann. Durch die Lage der Kontaktstelle innerhalb des Bauteils kann eine Temperatur innerhalb des Bauteils gemessen werden.

Bevorzugt ist der zweite Leiter zylindrisch und insbesondere als Zylinder ausgebildet.

Bevorzugt ist zwischen dem ersten Leiter und dem zweiten Leiter eine elektrische Isolationsschicht ausgebildet. Vorzugsweise ist die elektrische Isolationsschicht als Ummantelung des zweiten Leiters ausgebildet. Durch die elektrische Isolationsschicht wird ein elektrischer Kontakt zwischen dem zweiten Leiter und dem Bauteil verhindert, insbesondere wenn der zweite Leiter vom Bauteil umgeben ist. Somit stellt die elektrische Isolationsschicht sicher, dass der zweite Leiter und das Bauteil nur an der Kontaktstelle elektrisch miteinander verbunden sind.

Bevorzugt weist die elektrische Isolationsschicht eine Oxid-Schicht auf. Die Oxid-Schicht isoliert elektrisch und verhindert somit einen elektrischen Kontakt zwischen dem zweiten Leiter und dem Bauteil. Die Oxid-Schicht kann dünn und unter Einhaltung von geringen Fertigungstoleranzen aufgetragen werden.

Bevorzugt ist der erste Leiter mit dem zweiten Leiter an der Kontaktstelle verschmolzen. Vorzugsweise erfolgt das Verschmelzen durch einen Laser, insbesondere mittels Selektivem Lasersinter-Verfahren (SLS-Verfahren). Das Verschmelzen der beiden Leiter an der Kontaktstelle führt zu einer dauerhaften, elektrischen und thermischen Verbindung der beiden Leiter. Vorzugsweise kann während des Verschmelzens des ersten und zweiten Leiters die elektrische Isolationsschicht, insbesondere eine Oxid-Schicht, an der Kontaktstelle entfernt, insbesondere weggeschmolzen werden. Somit wird die tatsächliche Bauteiltemperatur an der Kontaktstelle gemessen und die Messgenauigkeit erhöht.

Bevorzugt ist der erste Leiter und/oder der zweite Leiter zumindest teilweise mittels Selektivem Lasersinter-Verfahren hergestellt. Vorzugsweise wird der erste Leiter vollständig mittels Selektivem Lasersinter-Verfahren ausgebildet. Alternativ wird der erste Leiter teilweise mittels Selektivem Lasersinter-Verfahren ausgebildet. Vorzugsweise wird der zweite Leiter vollständig mittels Selektivem Lasersinter-Verfahren ausgebildet. Alternativ wird der zweite Leiter teilweise mittels Selektivem Lasersinter-Verfahren ausgebildet. Die additive Fertigung ermöglicht die Ausformung komplexer Strukturen. Beim Selektivem Lasersinter-Verfahren wird schichtweise aufgetragenes Material selektiv durch die Einwirkung eines Laserstrahls zu einer festen Struktur verschmolzen. Somit kann insbesondere die Verschmelzung des ersten Leiters mit dem zweiten Leiter an der Kontaktstelle im Zuge der additiven Fertigung des Bauteils mittels Selektivem Lasersinter-Verfahren erfolgen.

Bevorzugt weist das erste Material Eisen auf und weist das zweite Material eine Kupfer-Nickel-Legierung auf. Vorzugsweise ist das erste Material oder das erste und zweite Material geeignet für die Herstellung mittels Selektivem Lasersinter-Verfahren. Vorzugsweise umfassen die Materialpaarungen aus dem ersten und zweiten Material typische Materialpaarung von Thermoelementen, bspw. des Typs J. Insbesondere sind das erste Material und das zweite Material ausgebildet als Materialpaarung zur Erzeugung einer hohen Thermospannung und/oder hohen Linearität der Thermospannung über einen großen Temperaturbereich, insbesondere den Temperaturmessbereich. Bevorzugt liegt der Temperaturmessbereich zwischen Temperaturen von 0 K und 2500 K, insbesondere zwischen 60 K und 1600 K.

Bevorzugt ist zwischen dem ersten Leiter und dem zweiten Leiter an den der Kontaktstelle gegenüberliegenden Enden eine Vergleichsstelle ausgebildet zur Messung einer Spannung. Hierbei wird die Spannung an den beiden offenen Enden der beiden Leiter gemessen. Aus der zwischen dem ersten Leiter und zweiten Leiter aus unterschiedlichen Materialien auftretende Thermospannung aufgrund des thermoelektrischen Effekts, kann auf eine Temperaturdifferenz zwischen der Kontaktstelle und der Vergleichsstelle geschlossen werden. Vorzugsweise ist die Vergleichsstelle unmittelbar am Bauteil angeordnet. Insbesondere hat die Vergleichsstelle eine bekannte Temperatur. Somit kann mit der bekannten Temperatur der Vergleichsstelle die Temperatur der Kontaktstelle bestimmt und die Temperatur an der Messstelle im Bauteil ermittelt werden.

Bevorzugt sind der erste Leiter und die Vergleichsstelle und/oder der zweite Leiter und die Vergleichsstelle mit einem elektrischen Leiter verbunden. Vorzugsweise ist der elektrische Leiter mit dem ersten Leiter über das Bauteil verbunden. Der erste und/oder zweite Leiter kann an einer Anschlussstelle mit einem elektrischen Leiter verbunden werden, um eine elektrische Verbindung zwischen dem ersten und/oder zweiten Leiter und der Vergleichsstelle herzustellen. Somit wird der Kontakt des ersten und/oder zweiten Leiters bis zur Vergleichsstelle verlängert, ohne dass der erste und/oder zweite Leiter bis zur Vergleichsstelle ausgebildet ist. Vorzugsweise sind die Vergleichsstelle und das Bauteil räumlich getrennt voneinander angeordnet, insbesondere ist die Vergleichsstelle in Entfernung zum Bauteil angeordnet.

Ein zweiter Aspekt der vorliegenden Erfindung betrifft ein Bauteil mit mindestens einem integrierten Temperatursensor. Der mindestens eine Temperatursensor ist Bestandteil des Bauteils und wird bereits bei der Fertigung in das Bauteils integriert. Somit stellt das Bauteil selbst die Temperaturmessung bereit. Es entfällt ein nachträgliches Anbringen eines Temperatursensors und die vorstehend bezeichneten Nachteile aus dem Stand der Technik können überwunden werden.

Vorzugsweise ist das Bauteil weitergebildet anhand der Merkmale des vorstehend beschriebenen Temperatursensors.

Bevorzugt sind mehrere Temperatursensoren in das Bauteil integriert. Die mehreren Temperatursensoren können mindestens teilweise insbesondere in axialer, radialer und/oder tangentialer Richtung im Bauteil angeordnet sein. Hierdurch wird eine lokal aufgelöste Temperaturmessung für eine Temperaturverteilung im Bauteil ermöglicht und/oder die mehreren Temperatursensoren können als Redundanz genutzt werden. Somit kann bspw. die Genauigkeit und/oder Zuverlässigkeit des Messsystems verbessert werden.

Bevorzugt weisen die mehreren Temperatursensoren unterschiedliche Eindringtiefen auf, zur Bestimmung einer räumlichen Temperaturverteilung und/oder zeitlichen Temperaturentwicklung im Bauteil. Alternativ können mindestens zwei Temperatursensoren unterschiedliche Eindringtiefen aufweisen. Die Temperatursensoren können in einer gemeinsamen Bauteilebene oder in unterschiedlichen Bauteileben angeordnet sein. Die unterschiedlichen Eindringtiefen ermöglichen die Temperaturmessung insbesondere bei unterschiedlichen Entfernungen zur Bauteiloberfläche. Somit wird neben der örtlichen Auflösung bzw. Temperaturverteilung im Bauteil bspw. eine Messung der Temperaturveränderung im Bauteil über der Zeit möglich. Insbesondere kann bspw. eine Wärmeflussdichte im Bauteil bestimmt werden.

Bevorzugt weisen die mehreren Temperatursensoren identische zweite Materialien auf oder mindestens zwei Temperatursensoren unterschiedliche zweite Materialien auf. Hierbei ist das Material des ersten Leiters durch das Bauteil vorgegeben. Wo es vorteilhaft erscheint, können unterschiedliche zweite Materialien verwendet werden, bspw. um unterschiedliche Temperaturbereiche besser erfassen bzw. auflösen zu können oder aus konstruktiven oder kostentechnischen Gründen. Somit ist die Materialpaarung der Temperatursensoren nicht auf eine Kombination erster und zweiter Materialien beschränkt.

Ein dritter Aspekt der Erfindung betrifft ein Verfahren zur Herstellung eines bauteilintegrierten Temperatursensors aufweisend die Bereitstellung eines ersten Teils eines Bauteils aus einem ersten Material mit einer Grenzfläche, wobei durch das Bauteil ein erster Leiter ausgebildet ist, die Bereitstellung mindestens eines zweiten Leiters aus einem zweiten Material an der Grenzfläche des ersten Teils des Bauteils, wobei der zweite Leiter zumindest teilweise vom Bauteil umgeben ist, so dass eine Kontaktstelle innerhalb des Bauteils ausgebildet ist und ein schichtweiser Aufbau eines zweiten Teils des Bauteils aus einem ersten Material auf der Grenzfläche mittels Selektivem Lasersinter-Verfahren, wobei der mindestens eine zweite Leiter mit dem Bauteil an der Kontaktstelle mittels Selektivem Lasersinter-Verfahren verschmolzen wird.

Vorzugsweise weist der zweite Leiter eine elektrische Isolationsummantelung auf. Die Bereitstellung des ersten Teils des Bauteils kann durch unterschiedliche Herstellungsverfahren erfolgen. So kann der erste Teil des Bauteils insbesondere durch ein subtraktives Fertigungsverfahren hergestellt werden. Alternativ kann der erste Teil des Bauteils durch ein additives Fertigungsverfahren, insbesondere das Selektive Lasersinter-Verfahren hergestellt werden.

Vorzugsweise ist das Verfahren weitergebildet anhand der Merkmale des vorstehend beschriebenen Temperatursensors.

Bevorzugt stellt der erste Teil des Bauteils an der Grenzfläche Öffnungen zum Einsetzen des mindestens einen zweiten Leiters bereit, insbesondere durch Bohren. Alternativ können die Öffnung durch spezielle Fertigungsverfahren, bspw. durch Laserbohren, bereitgestellt werden. Durch das nachträgliche Einbringen der Öffnungen wird der Fertigungsschritt für den ersten Teil des Bauteils zunächst von der Breitstellung der zweiten Leitern entkoppelt.

Bevorzugt ist der erste Teil des Bauteils additiv, insbesondere durch das Selektive Lasersinter-Verfahren, gefertigt und stellt Öffnungen zum Einsetzen des mindestens einen zweiten Leiter bereit. Durch das additive Fertigungsverfahren können die Öffnungen für die zweiten Leiter direkt während der Fertigung des ersten Teils des Bauteils ausgebildet werden. Somit wird eine notwendige Nachbearbeitung des Bauteils hinsichtlich des Einbringens von Öffnungen vermieden.

Bevorzugt erstrecken sich die Öffnungen von einer Außenfläche des ersten Teils des Bauteils bis zur Grenzfläche. Die Öffnung können als Durchgangslöcher zum Einschieben der zweiten Leiter ausgebildet sein, so dass die Öffnung den ersten Teil des Bauteils von einer Außenfläche bis zur Grenzfläche durchdringen. Alternativ können die Öffnung auch als Vertiefungen auf der Grenzfläche ausgebildet sein zum Einlegen der zweiten Leiter, so dass der zweite Leiter in der Ebene der Grenzfläche ausgebildet ist. Alternativ kann bei mehreren Öffnungen ein Teil der Öffnung als Durchgangslöcher ausgebildet sein und ein anderer Teil als Vertiefungen in der Ebene der Grenzfläche ausgebildet sein.

Im Folgenden werden unter Bezugnahme auf die beigefügten Figuren beispielhafte erfindungsgemäße Ausführungsformen der erfindungsgemäßen Vorrichtung sowie dem erfindungsgemäßen Verfahren erläutert.

Es zeigen:
Fig 1 ein schematisches Schnittbild in Seitenansicht eines bauteilintegrierten Temperatursensors gemäß einer beispielhaften Ausführungsform der vorliegenden Erfindung;
Fig. 2 ein schematisches Schnittbild in Seitenansicht eines Bauteils mit mehreren integrierten Temperatursensoren gemäß einer beispielhaften Ausführungsform der vorliegenden Erfindung;
Fig. 3 eine schematische Darstellung eines Verfahrens zur Herstellung eines bauteilintegrierten Temperatursensors.

Gleiche oder ähnliche Bauteile werden in den Figuren mit gleichen Bezugszeichen gekennzeichnet.

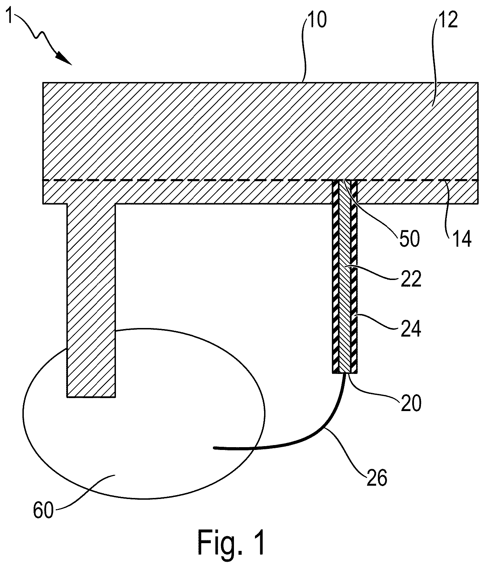

Fig. 1 zeigt eine bevorzugte Ausführungsform der vorliegenden Erfindung. Der Temperatursensor 1 weist einen ersten Leiter 10 aus einem ersten Material 12 und einen zweiten Leiter 20 aus einem zweiten Material 22 auf, wobei der zweite Leiter 20 teilweise vom ersten Leiter 10 umgeben ist. Hierbei kann der zweite Leiter auch schräg oder in einer anderen Orientierung zur Außenfläche des ersten Leiters (10) ausgebildet sein. Der erste Leiter 10 ist mit dem zweiten Leiter 20 an einer Kontaktstelle 50 miteinander verbunden, insbesondere verschmolzen, wobei sich die Kontaktstelle 50 im inneren des ersten Leiters 10 an einer Grenzfläche 14 des ersten Leiters 10 befindet. Hierbei kann die Grenzfläche 14 mit einer Schichtebene mindestens des zweiten Teils des Bauteils 100 zusammenfallen, insbesondere bei der additiven Fertigung mittels Selektivem Lasersinter-Verfahren. Vorzugsweise erfolgt die Verschmelzung des ersten 10 und des zweiten Leiters 20 an der Kontaktstelle 50 im Zuge des schichtweisen Aufbaus des Bauteils 100 mittels Selektivem Lasersinter-Verfahren. Zwischen dem zweiten Leiter 20 und dem ersten Leiter 10 ist eine elektrische Isolationsschicht 24 ausgebildet. Der zweite Leiter 20 ist mit einem elektrischen Leiter 26 an dem der Kontaktstelle 50 gegenüberliegenden Ende mit einer Vergleichsstelle 60 verbunden. Der erste Leiter 10 kann direkt mit der Vergleichsstelle 60 verbunden sein, wobei die Vergleichsstelle 60 ausgebildet ist zur Messung einer Spannung. Hierbei kann die Vergleichsstelle 60 unmittelbar am Bauteil 100 angeordnet sein oder, insbesondere bei Verwendung eines elektrischen Leiters, räumlich getrennt vom Bauteil 100, insbesondere in Entfernung zum Bauteil 100, angeordnet sein. Insbesondere hat die Vergleichsstelle 60 eine bekannte Temperatur. Die Darstellung des ersten Leiters 10 und des zweiten Leiters 20 ist nur schematisch und nicht maßstabsgerecht, insbesondere auch nicht relativ maßstabsgerecht zueinander und zu den weiteren dargestellten Bauteilen. Weiterhin ist die Erfindung nicht auf die dargestellte Form des Bauteils 100 beschränkt. Vielmehr ermöglicht die Anwendung additiver Fertigungsverfahren, insbesondere des Selektivem Lasersinter-Verfahrens, die Ausformung komplexer Bauteilgeometrien.

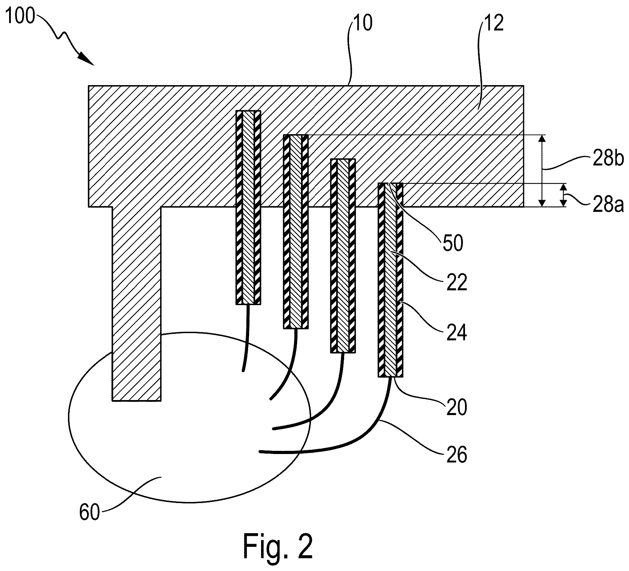

Fig. 2 zeigt einen weiteren Aspekt der vorliegenden Erfindung in einer bevorzugten Ausführungsform der vorliegenden Erfindung für ein Bauteil 100 mit integriertem Temperatursensor 1. Das Bauteil 100 mit integriertem Temperatursensor 1 weist mehrere Temperatursensoren 1 auf, mit einem ersten Leiter 10 aus einem ersten Material 12 und mehreren zweiten Leitern 20 aus zweiten Materialien 22, wobei die zweiten Leiter 20 teilweise vom ersten Leiter 10 umgeben sind. Die mehreren Temperatursensoren 1 weisen den gleichen ersten Leiter 10 aus dem ersten Material 12 auf, wobei die mehreren Temperatursensoren 1 unterschiedliche Eindringtiefen 28a, 28b aufweisen. Die mehreren Temperatursensoren 1 können identische zweite Materialien 22 aufweisen oder mindestens zwei Temperatursensoren 1 können unterschiedliche zweite Materialien 22 aufweisen. Der gemeinsame erste Leiter 10 ist mit den zweiten Leitern 20 an den jeweiligen Kontaktstellen 50 miteinander elektrisch und thermisch verbunden, insbesondere verschmolzen, wobei sich die Kontaktstellen 50 im inneren des ersten Leiters 10 befinden. Vorzugsweise sind die Kontaktstellen 50 auf einer gemeinsamen Grenzfläche ausgebildet. Alternativ sind die Kontaktstellen 50 jeweils auf eigenen Grenzflächen ausgebildet. Zwischen den zweiten Leitern 20 und dem ersten Leiter 10 ist jeweils eine elektrische Isolationsschicht 24 ausgebildet. Die zweiten Leiter 20 sind mit elektrischen Leitern 26 an den der Kontaktstelle 50 gegenüberliegenden Enden mit einer Vergleichsstelle 60 verbunden. Der erste Leiter 10 kann direkt mit der Vergleichsstelle 60 verbunden sein, wobei die Vergleichsstelle 60 ausgebildet ist zur Messung einer Spannung zwischen dem ersten Leiter 10 und den jeweiligen zweiten Leitern 20. Insbesondere hat die Vergleichsstelle 60 eine bekannte Temperatur. Die Darstellung des ersten Leiters 10 und der zweiten Leiter 20 ist nur schematisch und nicht maßstabsgerecht, insbesondere auch nicht relativ maßstabsgerecht zueinander und zu den weiteren dargestellten Bauteilen. Weiterhin ist die Erfindung nicht auf die dargestellte Form des Bauteils 100 beschränkt. Vielmehr ermöglicht die Anwendung additiver Fertigungsverfahren, insbesondere des Selektivem Lasersinter-Verfahrens, die Ausformung komplexer Bauteilgeometrien.

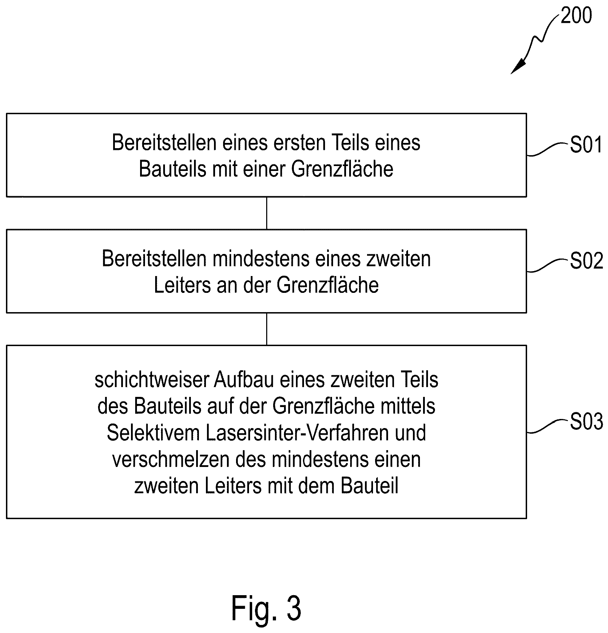

Fig. 3 zeigt einen weiteren Aspekt der vorliegenden Erfindung in einer bevorzugten Ausführungsform der vorliegenden Erfindung für ein Verfahren 200 für die Herstellung eines bauteilintegrierten Temperatursensors 1. Im Verfahrensschritt S01 wird ein erster Teil eines Bauteils 100 mit einer Grenzfläche 14 bereitgestellt. Hierbei kann der erste Teil des Bauteils 100 aus einem additiven Fertigungsverfahren, insbesondere dem Selektiven-Lasersinter-Verfahren, bereitgestellt werden oder aus einem subtraktiven Fertigungsverfahren, bspw. spanende Verfahren. Vorzugsweise stellt der erste Teil des Bauteils 100 an der Grenzfläche 14 Öffnungen zum Einsetzen des mindestens einen zweiten Leiters 20 bereit, insbesondere durch Bohren.

Im Verfahrensschritt S02 wird an der Grenzfläche 14 des ersten Leiters 10 mindestens ein zweiter Leiter 20 bereitgestellt, so dass die Kontaktstelle 50 des mindestens einen zweiten Leiters 20 in der Grenzfläche 14 ausgebildet ist. Der zweite Leiter 20 kann hierbei durch Öffnung, insbesondere Durchgangslöcher, von einer Außenseite des ersten Leiters 10 in den ersten Leiter 10 eingeschoben werden, bis die Kontaktstelle 50 in der Grenzfläche 14 ausgebildet ist. Alternativ kann der zweite Leiter 20 in Vertiefungen auf der Grenzfläche 14 eingesetzt werden, so dass der zweite Leiter 20 in der Ebene der Grenzfläche 14 ausgebildet ist.

Im Verfahrensschritt S03 wird schichtweise ein zweiter Teil des Bauteils 100 auf der Grenzfläche 14 aufgebaut mittels Selektivem Lasersinter-Verfahren, wobei der erste Leiter 10 und der mindesten eine zweite Leiter 20 an der Kontaktstelle 50 miteinander verschmolzen werden.

Bevorzugt werden die Verfahrensschritte S02 und S03 abschnittsweise und wiederholend hintereinander ausgeführt, wobei zwischen dem Verfahrensschritten S03 und S02 eine weitere Grenzfläche 14 bereitgestellt wird. Vorzugsweise werden die Verfahrensschritte S02 und S03 so oft wiederholt, bis alle Temperatursensoren 1 bereitgestellt sind. Abschließend erfolgt der Verfahrensschritt S03 bis das Bauteil 100 schichtweise vollständig ausgeformt wurde.

### Bezugszeichenliste:

- 1: Temperatursensor
- 10: Erster Leiter
- 12: Erstes Material
- 14: Grenzfläche
- 20: Zweiter Leiter
- 22: Zweites Material
- 24: Isolationsschicht
- 26: Elektrischer Leiter
- 28a, b: Eindringtiefe
- 50: Kontaktstelle
- 60: Vergleichsstelle
- 100: Bauteil
- 200: Herstellungsverfahren

## Patentansprüche

1. Temperatursensor zur Temperaturmessung in einem Bauteil, aufweisend einen ersten Leiter aus einem ersten Material und einen zweiten Leiter aus einem zweiten Material, wobei sich das erste Material vom zweiten Material unterscheidet und der erste und zweite Leiter an einer Kontaktstelle elektrisch und thermisch miteinander verbunden sind,
**dadurch gekennzeichnet, dass**
der erste Leiter durch das zu vermessende Bauteil ausgebildet ist.

2. Temperatursensor nach Anspruch 1, wobei der zweite Leiter zumindest teilweise vom Bauteil umgeben ist, so dass die Kontaktstelle innerhalb des Bauteils ausgebildet ist.

3. Temperatursensor nach Anspruch 1 oder 2, wobei zwischen dem ersten Leiter und dem zweiten Leiter eine elektrische Isolationsschicht, insbesondere eine Oxid-Schicht, ausgebildet ist.

4. Temperatursensor nach einem der Ansprüche 1 bis 3, wobei der erste Leiter mit dem zweiten Leiter an der Kontaktstelle verschmolzen ist.

5. Temperatursensor nach einem der Ansprüche 1 bis 4, wobei der erste Leiter und/oder der zweite Leiter zumindest teilweise mittels Selektivem Lasersinter-Verfahren hergestellt ist.

6. Temperatursensor nach einem der Ansprüche 1 bis 5, wobei der erste Leiter mit dem zweiten Leiter an der Kontaktstelle mittels Selektivem Lasersinter-Verfahren verschmolzen wird.

7. Temperatursensor nach einem der Ansprüche 1 bis 6, wobei das erste Material Nickel oder Eisen aufweist und das zweite Material Eisen oder eine Kupfer-Nickel-Legierung aufweist.

8. Temperatursensor nach einem der Ansprüche 1 bis 7, wobei zwischen dem ersten Leiter und dem zweiten Leiter an den der Kontaktstelle gegenüberliegenden Enden eine Vergleichsstelle ausgebildet ist zur Messung einer Spannung, wobei insbesondere der erste Leiter und die Vergleichsstelle und/oder der zweite Leiter und die Vergleichsstelle mit einem elektrischen Leiter verbunden sind.

9. Bauteil mit mindestens einem integrierten Temperatursensor nach einem der Ansprüche 1 bis 8, wobei insbesondere mehrere Temperatursensoren in das Bauteil integriert sind.

10. Bauteil nach Anspruch 9, wobei die mehreren Temperatursensoren unterschiedliche Eindringtiefen aufweisen, zur Bestimmung einer Temperaturverteilung und/oder zeitlichen Temperaturentwicklung im Bauteil.

11. Bauteil nach einem der Ansprüche 9 oder 10, wobei die mehreren Temperatursensoren identische zweite Materialien aufweisen oder mindestens zwei Temperatursensoren unterschiedliche zweite Materialien aufweisen.

12. Verfahren zur Herstellung eines bauteilintegrierten Temperatursensors insbesondere nach einem der Ansprüche 1 bis 8, aufweisend die Schritte: Bereitstellen eines ersten Teils eines Bauteils aus einem ersten Material mit einer Grenzfläche, wobei durch das Bauteil ein erster Leiter ausgebildet ist; Bereitstellen mindestens eines zweiten Leiters aus einem zweiten Material an der Grenzfläche des ersten Teils des Bauteils, wobei der zweite Leiter zumindest teilweise vom Bauteil umgeben ist, so dass eine Kontaktstelle innerhalb des Bauteils ausgebildet ist; und schichtweiser Aufbau eines zweiten Teils des Bauteils aus einem ersten Material auf der Grenzfläche mittels Selektivem Lasersinter-Verfahren, wobei der mindestens eine zweite Leiter mit dem Bauteil an der Kontaktstelle mittels Selektivem Lasersinter-Verfahren verschmolzen wird.

13. Verfahren nach Anspruch 12, wobei der erste Teil des Bauteils an der Grenzfläche Öffnungen zum Einsetzen des mindestens einen zweiten Leiters bereitstellt, insbesondere durch Bohren.

14. Verfahren nach einem der Ansprüche 12 oder 13, wobei der erste Teil des Bauteils additiv, insbesondere durch das Selektive Lasersinter-Verfahren, gefertigt ist und Öffnungen zum Einsetzen des mindestens einen zweiten Leiter bereitstellt.

15. Verfahren nach einem der Ansprüche 12 bis 14, wobei die Öffnungen sich erstrecken von einer Außenfläche des ersten Teils des Bauteils bis zur Grenzfläche.
